# EUROPÄISCHE PATENTSCHRIFT

(11) **EP 3 896 342 B1**
(45) Veröffentlichungstag und Bekanntmachung des Hinweises auf die Patenterteilung: **15.10.2025**
(21) Anmeldenummer: 21167157.3
(22) Anmeldetag: 07.04.2021
(51) Int. Cl.: F24C 14/00

(54) **REINIGUNGSKOMBINATION ZUM ENTNEHMBAREN ANORDNEN IN EINEM GARRAUM EINES GARGERÄTS**
CLEANING COMBINATION FOR REMOVABLE ARRANGEMENT IN A COOKING CHAMBER OF A COOKING APPLIANCE
COMBINATION DE NETTOYAGE DESTINÉ À L'AGENCEMENT AMOVIBLE DANS UN COMPARTIMENT DE CUISSON D'UN APPAREIL DE CUISSON

(30) Priorität: 14.04.2020 DE 102020204707
(43) Veröffentlichungstag der Anmeldung: 20.10.2021
(73) Patentinhaber: Werkhaus GmbH & Co. KG, 83064 Raubling (DE)
(72) Erfinder: Appel, Nikolaus, 6342 Niederndorf (AT); Kurz, Philipp, 6342 Niederndorf (AT); Weiland, Andreas, 6342 Niederndorf (AT)
(74) Vertreter: Rau, Schneck & Hübner Patentanwälte Rechtsanwälte PartGmbB

(56) Entgegenhaltungen:
- WO-A1-2020/009848
- DE-A1- 102014 207 558

## Beschreibung

Die Erfindung betrifft eine Reinigungskombination mit einer Reinigungseinheit und einem Reinigungseinsatz zum entnehmbaren Anordnen in einem Garraum eines Gargeräts.

Die Erfindung betrifft auch ein Verfahren zum Reinigen einer Garkammer eines Gargeräts.

Durch offenkundige Vorbenutzung sind Gargeräte in Form von Dampfgar-öfen bekannt, deren Garkammer unter Verwendung einer Reinigungszusammensetzung reinigbar ist. Zum Aufnehmen und Ausbringen der Reinigungszusammensetzung in dem Garraum sind an einer Garkammerwand bauraumintensive Mittel ausgebildet, welche im Garbetrieb störend sind und anfällig sind für die Anlagerung hartnäckiger Verschmutzungen. Aus der DE 10 2015 109 017 A1 ist eine Reinigungsvorrichtung mit Reinigungsmittel- und Klarspülmittelkompartiment, welche reversibel im Garraum eines Gargeräts angeordnet ist, bekannt. Eine Vorrichtung zum Reinigen eines Haushaltsgeräts ist bekannt aus der DE 10 2014 207 558 A1. Aus der WO 2020/009848 A1 ist ein Backofen mit Dampferzeuger bekannt.

Es ist deshalb eine Aufgabe der Erfindung, eine verbesserte Reinigungskombination zu schaffen, welche insbesondere eine besonders gründliche Reinigung des Garraums ermöglicht, den zur Verfügung stehenden Bauraum in möglichst geringem Umfang beansprucht, besonders einfach handhabbar ist und eine gleichmäßige Verteilung der Reinigungszusammensetzung in der Garkammer gewährleistet.

Diese Aufgabe wird durch eine Reinigungskombination für ein Gargerät mit den Merkmalen des Anspruchs 1 gelöst. Es wurde erkannt, dass ein Reinigungseinsatz mit einem Aufnahmemittel zum reversibel fixierten Aufnehmen einer Reinigungseinheit mit einer Reinigungszusammensetzung und einem mit dem Aufnahmemittel verbundenen Tragkörper zum Positionieren des Aufnahmemittels relativ zu dem Garraum, entnehmbar in dem Garraum angeordnet werden kann, wodurch der Garraum im Garbetrieb vollständig erhalten bleibt und wodurch die Garkammer besonders gründlich reinigbar ist. Der Garraum wird nicht durch Mittel zum Aufnehmen der Reinigungszusammensetzung beschränkt. Derartige, im Garbetrieb verschmutzungsanfällige Mittel können vermieden werden. Insbesondere ermöglicht der aus dem Garraum entnehmbare Reinigungseinsatz das Positionieren der an dem Aufnahmemittel angebrachten Reinigungseinheit in einem zentralen Bereich des Garraums. Durch die Entnehmbarkeit des Reinigungseinsatzes kann dieser für den Garvorgang benötigte, zentrale Bereich nach dem Reinigungsvorgang wieder freigegeben werden. Die Anordnung der Reinigungseinheit in dem zentralen Bereich gewährleistet ein besonders gleichmäßiges Ausbringen der Reinigungszusammensetzung in dem Garraum. Der Reinigungsvorgang ist somit besonders effizient und energiesparend.

Das Aufnahmemittel ist dazu ausgebildet, eine lösbare Verbindung zu der Reinigungseinheit herzustellen. Insbesondere gewährleistet das Aufnahmemittel eine verliersichere Aufnahme der Reinigungseinheit. Beispielsweise kann das Aufnahmemittel dazu ausgebildet sein, die Position und/oder die Orientierung der Reinigungseinheit relativ zu dem Tragkörper vollständig festzulegen. Das Aufnahmemittel kann dazu ausgebildet sein, dass mindestens ein Freiheitsgrad, insbesondere genau ein Freiheitsgrad, insbesondere genau ein Drehfreiheitsgrad, der Reinigungseinheit relativ zu dem Tragkörper offen, also unbeschränkt, ist. Der mindestens eine, offene Freiheitsgrad kann die Montage der Reinigungseinheit an dem Tragkörper ermöglichen und/oder das besonders gleichmäßige Ausbringen der Reinigungszusammensetzung in dem Garraum, durch Verlagern der Reinigungseinheit relativ zu dem Tragkörper, gewährleisten.

Gemäß einem Aspekt der Erfindung ist das Aufnahmemittel dazu ausgebildet, eine kraftschlüssige und/oder formschlüssige Verbindung zu der Reinigungseinheit zu schaffen. Der Tragkörper kann dazu ausgebildet sein, eine kraftschlüssige und/oder formschlüssige Verbindung zu der Garkammer und/oder der Garkammertür zu schaffen. Vorzugsweise ist das Aufnahmemittel dazu ausgebildet, die reversible Verbindung zu der Reinigungseinheit werkzeuglos herzustellen und/oder zu lösen. Der Tragkörper kann dazu ausgebildet sein, die Verbindung zu der Garkammer und/oder zu der Garkammertür werkzeuglos herzustellen und/oder zu lösen. Der Reinigungseinsatz ist somit besonders einfach und effizient verwendbar.

Gemäß einem Aspekt der Erfindung ist der Tragkörper dazu ausgebildet, das Aufnahmemittel an der Garkammer und/oder an der Garkammertür aufliegend und/oder hängend zu befestigen. Unter der hängenden Befestigung wird verstanden, dass der Schwerpunkt des Reinigungseinsatzes, insbesondere mit der daran aufgenommenen Reinigungseinheit, in vertikaler Richtung unterhalb einer Verbindungsstelle zwischen dem Tragkörper und der Garkammer und/oder der Garkammertür angeordnet ist. Vorteilhaft wird hierdurch erreicht, dass die Reinigungszusammensetzung in dem Garraum besonders gleichmäßig verteilt werden kann, wodurch die Reinigung besonders effizient erfolgen kann.

Gemäß einem Aspekt der Erfindung ist das Aufnahmemittel in einem zentralen Bereich des Gargutträgers angeordnet. Vorzugsweise ist das Aufnahmemittel in einer Draufsicht, insbesondere bei dem bestimmungsgemäß in dem Garraum positionierten Tragkörper, in einem zentralen Bereich des Reinigungseinsatzes, insbesondere des Tragkörpers, insbesondere des Gargutträgers, und/oder der Garkammer, angeordnet. In der Draufsicht beträgt ein Abstand zwischen dem Aufnahmemittels und einer Außenkontur des Tragkörpers vorzugsweise mindestens 50 mm, insbesondere mindestens 100 mm. Vorzugsweise liegt der geometrische Flächenschwerpunkt des Reinigungseinsatzes, insbesondere des Tragkörpers, und/oder der Garkammer in der Draufsicht innerhalb einer Außenkontur des Aufnahmemittels. Vorteilhaft wird hierdurch erreicht, dass die Reinigungszusammensetzung an einer zentralen Position des Garraums und somit besonders gleichmäßig über den Garraum ausgebracht werden kann.

Das Aufnahmemittel kann, insbesondere entlang einer Haupterstreckungsebene des Gargutträgers, beabstandet zu dem zentralen Bereich, insbesondere zu einem geometrischen Flächenschwerpunkt des Tragkörpers angeordnet sein. Beispielsweise beträgt ein Abstand zwischen dem geometrischen Flächenschwerpunkt des Tragkörpers, insbesondere entlang der Haupterstreckungsebene des Tragkörpers, und einem geometrischen Flächenschwerpunkt des Aufnahmemittels oder eines Umrisses des Aufnahmemittels mindestens 10 mm, insbesondere mindestens 20 mm, insbesondere mindestens 50 mm, insbesondere mindestens 100 mm. Der Abstand kann in der Haupterstreckungsebene des Tragkörpers, insbesondere entlang einer Querrichtung und/oder einer Tiefenrichtung des Garraums, bemessen sein. Vorteilhaft wird durch eine exzentrische Anordnung des Aufnahmemittels an dem Tragkörper erreicht, dass die Reinigungseinheit in einem Bereich des Garraums positioniert werden kann, in dem das Ausbringen der Reinigungszusammensetzung nochmals effizienter erfolgen kann. In diesem Bereich liegt beispielsweise ein gegenüber dem übrigen Garraum erhöhter Luft-, Dampf- oder Wasserdurchsatz vor. Die Reinigungszusammensetzung kann somit besonders effizient ausgebracht und in dem Garraum verteilt werden.

Gemäß einem weiteren Aspekt der Erfindung ist das Gargerät als Ofen, insbesondere als Backofen und/oder als Dampfgarofen, ausgebildet. Das Gargerät verfügt vorzugsweise über eine Temperaturregelung zum Regeln der Temperatur in dem Garraum, insbesondere durch Erhitzen, und/oder über eine automatisierte Wasser- und/oder Dampfzufuhr.

Zum verliersicheren Aufnehmen der Reinigungseinheit kann das Aufnahmemittel ein reversibel verlagerbares Schließmittel aufweisen. Vorzugsweise ist die Reinigungseinheit nicht ohne ein Verlagern des Schließmittels aus einer Verschlussstellung in eine Freigabestellung von dem Reinigungseinsatz, insbesondere dem Aufnahmemittel, abnehmbar. Beispielsweise kann das Schließmittel als Schließriegel ausgebildet sein.

Vorzugsweise weist der Tragkörper mindestens 3, insbesondere mindestens 4, Stellfüße zum Positionieren des Reinigungseinsatzes auf einer Abstellfläche, insbesondere einer Abstellebene, auf.

Gemäß der Erfindung weist der Tragkörper einen Gargutträger auf. Der Gargutträger kann zum Aufnehmen von Gargeschirr, insbesondere von Töpfen und/oder Brätern und/oder Pfannen, ausgebildet sein. Der Gargutträger kann auch zum Aufnehmen des zu erhitzenden Lebensmittels, insbesondere als Grillspieß, ausgebildet sein. Vorzugsweise weist der Tragkörper eine den Garvorgang unterstützende Funktion auf. Vorteilhaft wird hierdurch erreicht, dass der Reinigungseinsatz eine in der Küche ohnehin erforderliche Vorrichtung ersetzt. Ein Bedarf an zusätzlichem Stauraum für den Reinigungseinsatz kann somit verhindert werden.

Gemäß einem weiteren Aspekt der Erfindung weist der Gargutträger einen Backrost auf. Vorzugsweise ist der Gargutträger ein Backrost. Der Backrost kann mehrere Gitterstäbe umfassen. Vorzugsweise bilden die Gitterstäbe einen Gitterrahmen und eine Stellfläche zum Abstellen des Garguts aus. Ein Backrost ist eine in der Küche im Regelfall ohnehin benötigte Vorrichtung. Durch die Ausbildung des Gargutträgers als Backrost wird kein zusätzlicher Stauraum in der Küche zur Aufbewahrung des Reinigungseinsatzes benötigt.

Der Gargutträger kann alternativ als Lochblech und/oder als Backblech ausgebildet sein.

Gemäß einem weiteren Aspekt der Erfindung ist das Aufnahmemittel durch mindestens einen Gitterstab des Backrosts ausgebildet. Vorzugsweise ist das Aufnahmemittel durch mindestens zwei Gitterstäbe, insbesondere genau zwei Gitterstäbe, ausgebildet. Der mindestens eine Gitterstab kann zur, insbesondere drehbaren, Anlage der Reinigungseinheit ausgebildet sein. Beispielsweise ist der mindestens eine Gitterstab hierzu zumindest abschnittsweise kreisbogenförmig ausgebildet.

Gemäß einem weiteren Aspekt der Erfindung weist der Tragkörper einen Schieneneingriff zum Verbinden mit einer Tragschiene des Gargeräts auf. Bei der Tragschiene des Gargeräts handelt es sich vorzugsweise um, insbesondere paarweise an gegenüberliegenden Seitenwänden der Garkammer angeordnete, Schienen zum Aufnehmen eines Backrosts und/oder eines Backblechs.

Erfindungsgemäß weist das Aufnahmemittel ein Formschlusselement zum formschlüssigen Verbinden mit der Reinigungseinheit auf. Das Aufnahmemittel ist zur Ausbildung eines Bajonettverschlusses und/oder einer Rastverbindung und/oder einer Riegelverbindung mit der Reinigungseinheit ausgebildet. Hierdurch wird eine besonders zuverlässige, insbesondere werkzeuglos lösbare, Verbindung zwischen der Reinigungseinheit und dem Aufnahmemittel gewährleistet.

Vorzugsweise ist der Reinigungseinsatz ein Backrost mit einem Aufnahmemittel zum fixierbaren Anordnen einer Reinigungseinheit, insbesondere zum formschlüssigen Verbinden mit der Reinigungseinheit, insbesondere in Form eines Bajonettverschlusses.

Die Reinigungseinheit kann eine Reinigungszusammensetzung, eine Kammer, in der die Reinigungszusammensetzung angeordnet ist, mit einer Abgabeöffnung zum Abgeben der Reinigungszusammensetzung in den Garraum, und ein Gegen-Aufnahmemittel zum reversibel fixierten Anbringen an dem Reinigungseinsatz aufweisen. Das Gegen-Aufnahmemittel kann zum, insbesondere reversiblen, und/oder werkzeuglosen, Verbinden mit dem Aufnahmemittel des Reinigungseinsatzes ausgebildet sein.

Die Kammer umfasst vorzugsweise ein temperaturbeständiges, insbesondere bis mindestens 100° C, insbesondere bis mindestens 150° C, insbesondere bis mindestens 200° C, insbesondere bis mindestens 250° C, beständiges und/oder wasserunlösliches Material. Die Kammer kann auch aus einem wasserlöslichen und/oder schmelzbaren, insbesondere bei Temperaturen von maximal 200° C, insbesondere maximal 150° C, insbesondere maximal 100° C, schmelzbaren Material bestehen. Die Kammer kann auch aus einem kompostierbaren Material bestehen. Vorzugsweise umfasst die Kammer mindestens eines der nachfolgend genannten Materialien: Kunststoff, insbesondere Polypropylen und/oder Polykarbonat und/oder Polyethylen und/oder Acrylbutadienstyrol und/oder ein Biopolymer, insbesondere Polymilchsäure.

Die Kammer hat vorzugsweise genau eine, insbesondere mindestens eine, insbesondere mindestens zwei Abgabeöffnungen. Eine mit zwei Abgabeöffnungen ausgebildete Kammer kann zum besonders effizienten Ausbringen der Reinigungszusammensetzung mit Spülflüssigkeit durchströmt werden. Hierzu kann an mindestens einer der Abgabeöffnungen ein Leitungsanschluss zum Verbinden mit einer Wasserleitung angeordnet sein.

Die Reinigungszusammensetzung umfasst vorzugsweise mindestens einen, insbesondere mindestens zwei, insbesondere mindestens drei, Reinigungsbestandteile. Die Reinigungsbestandteile können miteinander vermengt oder getrennt voneinander in der Kammer vorliegen. Vorzugsweise erfolgt eine Trennung der mindestens zwei Reinigungsbestandteile durch mindestens eine Verschlussschicht. Vorzugsweise ist die Kammer durch die mindestens eine Verschlussschicht in mindestens zwei voneinander separierte Teilkammern unterteilt. Eine weitere Verschlussschicht kann zwischen der Abgabeöffnung und der Reinigungszusammensetzung oder an der Abgabeöffnung angeordnet sein. Vorteilhaft wird hierdurch erreicht, dass die Reinigungszusammensetzung bis zu ihrem Einsatz sicher in der Kammer eingeschlossen ist.

Die Reinigungszusammensetzung kann flüssige und/oder feste, insbesondere pulverförmige und/oder granulatförmige Reinigungsbestandteile umfassen. Vorzugsweise umfasst die Reinigungszusammensetzung mindestens einen der nachfolgend genannten Reinigungsbestandteile: Natriumkarbonat, Natriumperkarbonat, Zitronensäure. Vorzugsweise umfasst die Reinigungszusammensetzung 160 g pulverförmiges Natriumkarbonat und 60 g pulverförmige Zitronensäure.

Die mindestens eine Verschlussschicht ist vorzugsweise als Schmelzschicht, mit einer Schmelztemperatur von maximal 250° C, insbesondere maximal 200° C, insbesondere maximal 150° C, insbesondere maximal 100° C, und/oder als wasserlösliche Schicht ausgebildet. Besonders bevorzugt weisen mehrere Verschlussschichten jeweils unterschiedliche Schmelztemperaturen auf. Beispielsweise kann eine erste Verschlussschicht eine Schmelztemperatur von 65° C aufweisen und eine zweite Verschlussschicht kann eine Schmelztemperatur von 95° C aufweisen. Die Verschlussschicht ist vorzugsweise eine Kunststoffschicht und/oder eine Wachsschicht. Die Abgabe der Reinigungszusammensetzung kann somit besonders einfach temperaturgesteuert und/oder durch eine Flüssigkeitszufuhr gesteuert erfolgen.

Vorzugsweise sind die mehreren Teilkammern von der Abgabeöffnung aus hintereinander in der Kammer ausgebildet. Die Verschlussschichten weisen vorzugsweise eine von der Abgabeöffnung aus zunehmende Schmelztemperatur auf. Die Reinigungsbestandteile können somit temperaturgesteuert nacheinander aus der Reinigungseinheit abgegeben werden.

Gemäß einem weiteren Aspekt der Erfindung weist das Gegen-Aufnahmemittel ein Gegen-Formschlusselement zum formschlüssigen Verbinden mit dem Reinigungseinsatz auf. Das Gegen-Aufnahmemittel kann genau ein, insbesondere mindestens ein, insbesondere mindestens zwei, Gegen-Formschlusselemente aufweisen. Das mindestens eine Gegen-Formschlusselement ist vorzugsweise ein Bestandteil eines Bajonettverschlusses und/oder einer Rastverbindung und/oder einer Riegelverbindung. Das Gegen-Aufnahmemittel kann zum Verbinden mit dem durch den mindestens einen Gitterstab ausgebildeten Aufnahmemittel ausgebildet sein. Insbesondere kann das Aufnahmemittel eine Hinterschneidung zur Aufnahme des mindestens einen Gitterstabs aufweisen. Die Reinigungseinheit ist somit besonders zuverlässig, insbesondere verliersicher, mit dem Reinigungseinsatz verbindbar.

Gemäß einem weiteren Aspekt der Erfindung ist das Gegen-Aufnahmemittel einstückig mit der Kammer verbunden. Beispielsweise kann das Gegen-Aufnahmemittel stoffschlüssig mit der Kammer verbunden sein. Das Gegen-Aufnahmemittel und die Kammer können in einem Spritzgussverfahren, insbesondere in einem einzigen Verfahrensschritt, hergestellt sein. Die Kammer und das Gegen-Aufnahmemittel weisen vorzugsweise das gleiche Material auf. Die Reinigungseinheit ist somit besonders effizient und wirtschaftlich herstellbar.

Die Vorteile der Reinigungskombination entsprechen den Vorteilen des vorstehend beschriebenen Reinigungseinsatzes und der Reinigungseinheit. Insbesondere kann die Reinigungskombination mit den Merkmalen weitergebildet werden, die vorstehend im Zusammenhang mit dem Reinigungseinsatz und/oder der Reinigungseinheit beschrieben wurden. Die Reinigungskombination kann zum entnehmbaren Anordnen in dem Garraum des Gargeräts ausgebildet sein.

Vorzugsweise ist die Reinigungseinheit über das Gegen-Aufnahmemittel an dem Aufnahmemittel des Reinigungseinsatzes reversibel angebracht. Die Reinigungseinheit kann mit dem Reinigungseinsatz werkzeuglos verbindbar und/oder von diesem werkzeuglos lösbar sein.

Gemäß einem Aspekt der Erfindung durchdringt die an dem Reinigungseinsatz angebrachte Reinigungseinheit den Tragkörper. Vorzugsweise ist eine Haupterstreckungsrichtung der an dem Reinigungseinsatz angebrachten Reinigungseinheit senkrecht zu einer Haupterstreckungsebene des Reinigungseinsatzes ausgebildet. Das Aufnahmemittel kann eine Aufnahmeöffnung aufweisen, durch welche die Reinigungseinheit den Tragkörper durchdringt. Vorzugsweise ist das Aufnahmemittel durch eine Berandung der Aufnahmeöffnung ausgebildet. Der Reinigungseinsatz kann somit besonders kompakt ausgebildet sein.

Gemäß einem weiteren Aspekt der Erfindung ist die Reinigungseinheit derart an dem Reinigungseinsatz angeordnet, dass die Reinigungszusammensetzung schwerkraftbedingt durch die Abgabeöffnung aus der Kammer abgegeben werden kann. Die Reinigungskombination ist dabei vorzugsweise in der Garkammer angeordnet. Die Abgabeöffnung befindet sich dabei vorzugsweise am Boden der Reinigungseinheit. Insbesondere öffnet die Abgabeöffnung die Kammer nach unten. Die Reinigungszusammensetzung kann somit rein schwerkraftbedingt aus der Kammer herausfallen. Insbesondere bildet die Kammer in der in die Garkammer eingesetzte Position keinerlei Flüssigkeitsreservoir zur Aufnahme von Spülflüssigkeit. In die Kammer eindringende Spülflüssigkeit kann somit vollständig wieder aus dieser ablaufen.

Eine weitere Aufgabe der Erfindung besteht darin, ein verbessertes Verfahren zum Reinigen einer Garkammer eines Gargeräts zu schaffen, welches insbesondere besonders einfach ausführbar und effizient ist.

Diese Aufgabe wird durch ein Verfahren zum Reinigen einer Garkammer eines Gargeräts gelöst, mit den Schritten: Bereitstellen einer Reinigungskombination gemäß der vorstehenden Beschreibung, Verbinden der Reinigungseinheit mit dem Reinigungseinsatz durch Anbringen des Gegen-Aufnahmemittels an dem Aufnahmemittel, Positionieren des Reinigungseinsatzes mit der Reinigungseinheit in dem Garraum, Abgeben der Reinigungszusammensetzung aus der Abgabeöffnung in den Garraum zum Reinigen der Garkammer, und Entnehmen des Reinigungseinsatzes mit der Kammer aus dem Garraum. Die Vorteile des Verfahrens entsprechen den vorstehend im Zusammenhang mit der Reinigungskombination, dem Reinigungseinsatz und der Reinigungseinheit beschriebenen Vorteilen. Das Verfahren kann mit den Merkmalen weitergebildet werden, die vorstehend in Zusammenhang mit der Reinigungskombination und/oder dem Reinigungseinsatz und/oder der Reinigungseinheit beschrieben sind.

Vorzugsweise wird Wasser, insbesondere flüssig und/oder dampfförmig, durch den Garraum zirkuliert. Insbesondere erfolgt das Zirkulieren des Wassers über eine außerhalb der Garkammer angeordnete Leitung, insbesondere durch eine Ablauföffnung der Garkammer. Die Ablauföffnung ist vorzugsweise am Boden der Garkammer angeordnet. Durch das Zirkulieren des Wassers ist das Reinigungsverfahren besonders umwelt- und ressourcenschonend.

Vorzugsweise wird vor dem Abgeben der Reinigungszusammensetzung Frischwasser durch den Garraum zirkuliert. Diese Vorspülphase erfolgt vorzugsweise über eine Dauer in einem Bereich zwischen 5 min bis 20 min, insbesondere über eine Dauer von 10 min. Das verschmutzte Frischwasser kann abgepumpt werden. Vorzugsweise wird mehrfach Frischwasser in den Garraum zugeführt und als verschmutztes Spülwasser wieder abgepumpt. Der Garraum kann dabei auf eine Temperatur in einem Bereich von 30°C bis 60°C, insbesondere auf 50°C, aufgeheizt werden.

In einer Spülphase kann die Reinigungszusammensetzung, insbesondere der erste Reinigungsbestandteil, insbesondere umfassend Natriumkarbonat, aus der Kammer in den Garraum abgegeben werden. Vorzugsweise wird dem Garraum Frischwasser zugeführt. Das Frischwasser kann sich mit dem ersten Reinigungsbestandteil vermischen. Vorzugsweise entsteht dabei eine Reinigungslauge. Die Reinigungslauge wird vorzugweise mehrfach durch die Garkammer zirkuliert. Hierbei lösen sich hartnäckige Verschmutzungen von der Garkammerwand. Vorzugsweise wird dabei der Garraum auf einen Spültemperatur in einem Bereich von 30° C bis 80°C, insbesondere von 50° C bis 70°C, insbesondere auf 65° C, geregelt und/oder aufgeheizt. Die Spülphase hat vorzugsweise eine Dauer in dem Bereich von 30 min bis 120 min, insbesondere von 40 min bis 90 min, insbesondere von 60 min.

Gemäß einem Aspekt der Erfindung wird, insbesondere nach der Spülphase, Frischwasser durch den Garraum zirkuliert. Diese Zwischenspülphase entspricht im Wesentlichen der Vorspülphase. Die Temperatur des Garraums bleibt dabei vorzugsweise unverändert gegenüber der Temperatur in der Spülphase. Die Temperatur kann auch niedriger sein als in der Spülphase, insbesondere sukzessive abnehmen. Vorzugsweise erfolgt der Prozess des Zuführens von Frischwasser, des Zirkulierens durch den Garraum und des Abpumpens des verschmutzen Wassers, mindestens zweimal, insbesondere mindestens dreimal, aufeinanderfolgend.

Vorzugsweise wird, insbesondere nach der Spülphase und/oder nach der Zwischenspülphase, der zweite Reinigungsbestandteil, insbesondere umfassend Zitronensäure, in die Garkammer ausgebracht. Der Garraum wird vorzugsweise auf eine Temperatur von mindestens 60° C, insbesondere auf mindestens 80° C, insbesondere auf mindestens 90° C, insbesondere auf 95°C erhitzt. Die Temperatur ist vorzugsweise höher als die Temperatur in der Spülphase. Wasser kann durch den Garraum zirkuliert werden. Vorzugsweise bildet sich beim Vermengen des Wassers mit dem zweiten Reinigungsbestandteil eine Entkalkungslösung. Die Entkalkungslösung wird vorzugsweise mehrfach durch den Garraum zirkuliert. Danach kann die Entkalkungslösung abgepumt werden. Diese Entkalkungsphase dauert vorzugsweise 10 min bis 30 min, insbesondere 20 min.

Weitere Reinigungsbestandteile können nacheinander aus der Kammer in den Garraum freigegeben werden.

Eine Nachspülphase, welche vorzugsweise nach der Spülphase, insbesondere nach der Entkalkungsphase, durchgeführt wird, entspricht im Wesentlichen der Vorspülphase und der Zwischenspülphase. Die Temperatur des Garraums während der Nachspülphase kann der Temperatur des Garraums in der Entkalkungsphase entsprechen. Die Temperatur kann auch niedriger sein, insbesondere sukzessive abnehmen.

Das Gargerät kann eine Steuereinrichtung zum automatisierten Ausführen des Reinigungsverfahrens aufweisen.

Gemäß einem weiteren Aspekt der Erfindung wird mindestens eine Verschlussschicht zum Freigeben der Reinigungszusammensetzung temperaturbedingt geöffnet. Die Verschlussschicht kann hierbei aufgeschmolzen werden. Alternativ kann eine Verbindung, insbesondere eine Klebverbindung zwischen der Verschlussschicht und der Kammer geschmolzen werden. Vorzugsweise erfolgt ein temperaturbedingtes Öffnen zweier Verschlussschichten der Reinigungseinheit zum Freigeben zweier unterschiedlicher Reinigungsbestandteile der Reinigungszusammensetzung bei jeweils unterschiedlichen Aktivierungstemperaturen. Vorteilhaft wird hierdurch erreicht, dass unterschiedliche Reinigungsbestandteile, insbesondere mit unterschiedlichen Funktionen, insbesondere mit unterschiedlichen pH-Werten, automatisiert gesteuert in den Garraum freigegeben werden können.

Alternativ zum temperaturbedingten Öffnen der mindestens einen Verschlussschicht kann die Verschlussschicht oder die Kammerwand, insbesondere abschnittsweise oder vollständig, in Wasser aufgelöst werden und somit eine Freigabe der Reinigungszusammensetzung in den Garraum bewirken.

Vorzugsweise wird das Spülwasser und/oder das Frischwasser über ein Lüfterrad zum Umwälzen der Luft in dem Garraum, insbesondere ein Umluftrad, in den Garraum ausgebracht. Vorzugsweise wird die Flüssigkeit zum gleichmäßigen Verteilen in dem Garraum auf das rotierende Lüfterrad ausgebracht.

Gemäß einem weiteren Aspekt der Erfindung lässt sich das Gegen-Aufnahmemittel der Reinigungseinheit mittels mindestens eines, bevorzugt mittels mindestens zwei Befestigungsmittels, wie beispielsweise Haken, Ösen, Nuten im Garraum des Gargeräts anordnen. Das Gegen-Aufnahmemittel der Reinigungseinheit kann auch selbst entsprechende Befestigungsmittel aufweisen oder als entsprechendes Befestigungsmittel ausgebildet sein.

Gemäß einer Alternative kann die Reinigungseinheit mittels entsprechender Befestigungsmittel an einer hierzu passenden Befestigungseinrichtung im Garraum angeordnet werden.

Eine weitere Aufgabe der Erfindung besteht darin, eine Reinigungseinheit zu verbessern.

Diese Aufgabe wird durch eine Reinigungseinheit gelöst, welche zumindest eine lösliche Reinigungszusammensetzung aufweist. Die Reinigungseinheit kann insbesondere vollständig löslich ausgebildet sein. Unter einer löslichen Ausbildung sei hierbei insbesondere verstanden, dass die Reinigungseinheit gegebenenfalls unter Einwirkung von Wärme in Wasser oder einer Reinigungsflüssigkeit löslich ist.

Gemäß einem weiteren Aspekt der Erfindung umfasst die Reinigungseinheit als Anteile eine Auswahl aus einer oder mehreren Laugen, Säuren bzw. eines ihrer Salze und Wasser. Der Anteil an Lauge kann im Bereich von 30 ml bis 70 ml, insbesondere im Bereich von 40 ml bis 60 ml liegen.

Der Anteil an Säure kann im Bereich von 15 ml bis 55 ml, insbesondere im Bereich von 25 ml bis 45 ml, insbesondere im Bereich von 30 ml bis 40 ml liegen.

Der Anteil an Wasser kann insbesondere im Bereich von 0 ml bis 50 ml, insbesondere im Bereich von 5 ml bis 30 ml, insbesondere von höchstens 15 ml liegen.

Gemäß einem weiteren Aspekt der Erfindung ist die Reinigungseinheit in einer Tab-Form ausgebildet. Gemäß einem weiteren Aspekt der Erfindung ist die Reinigungseinheit in einer Kugelform ausgebildet. Die Reinigungseinheit kann insbesondere als Presskörper ausgebildet sein. Sie kann insbesondere flexibel in unterschiedliche Formen gepresst werden. Durch die Formgebung der Reinigungseinheit kann einerseits deren Anordnung im Garraum, insbesondere am Aufnahmemittel bzw. am Tragkörper andererseits der Ablauf des Reinigungsverfahrens, insbesondere die Abfolge unterschiedlicher Reinigungsphasen, bei welchen unterschiedliche Bestandteile der Reinigungszusammensetzung der Reinigungseinheit gelöst werden, beeinflusst werden. Gemäß einem weiteren Aspekt der Erfindung ist die Reinigungseinheit in einer Kugelform mit einem Fortsatz ausgebildet. Der Fortsatz kann zur Fixierung der Reinigungseinheit auf dem Tragkörper dienen. Er kann insbesondere zur formschlüssigen Verbindung mit dem Formschlusselement ausgebildet sein. Andere Formen sind ebenso möglich.

Gemäß einem weiteren Aspekt der Erfindung ist die Reinigungseinheit rückstandsfrei löslich. Die Reinigungseinheit kann insbesondere frei von Plastik und/oder Wachs sein. Hierdurch können unerwünschte Rückstände im Garraum oder anderen Bereichen des Gargeräts vermieden werden. Außerdem wird hierdurch Müll vermieden.

Gemäß einem weiteren Aspekt der Erfindung besteht die Reinigungseinheit aus den Bestandteilen Säure und Lauge. Hierunter seien insbesondere auch entsprechende Salze verstanden.

Gemäß einem weiteren Aspekt der Erfindung weist die Reinigungseinheit eine erste Wachsschicht auf. Die erste Wachsschicht kann zum Schutz der Reinigungseinheit dienen. Sie kann insbesondere die Reinigungszusammensetzung umschließen. Hierdurch ist ein Schutz gegen unbeabsichtigtes Auflösen der Reinigungseinheit möglich.

Die erste Wachsschicht kann auch zur Trennung der unterschiedlichen Bestandteile der Reinigungszusammensetzung dienen. Sie kann insbesondere zur Separierung eines inneren Bereichs der Reinigungseinheit von einem äußeren Bereich der Reinigungseinheit dienen.

Die erste Wachsschicht kann insbesondere zur Trennung eines Bereichs mit einer Säure bzw. deren Salzes und einem Bereich mit einer Lauge oder deren Salzes dienen.

Gemäß einem weiteren Aspekt weist die erste Wachsschicht einen Schmelzpunkt im Bereich von 50 °C bis 90 °C, insbesondere im Bereich von 60 °C bis 70 °C oder im Bereich von 80 °C bis 90 °C auf.

Gemäß einem weiteren Aspekt der Erfindung weist die Reinigungseinheit eine erste Wachsschicht und eine zweite Wachsschicht auf. Die erste Wachsschicht ist separat von der zweiten Wachsschicht. Die erste Wachsschicht kann insbesondere eine äußere Wachsschicht bilden. Die zweite Wachsschicht kann insbesondere eine innere Wachsschicht zur Separierung unterschiedlicher Bestandteile der Reinigungszusammensetzung bilden.

Gemäß einem weiteren Aspekt der Erfindung weist die zweite Wachsschicht einen höheren Schmelzpunkt auf als die erste Wachsschicht. Der Schmelzpunkt der ersten Wachsschicht kann insbesondere um mindestens 5 °C, insbesondere mindestens 10 °C, insbesondere mindestens 20 °C vom Schmelzpunkt der zweiten Wachsschicht abweichen. Die erste Wachsschicht und die zweite Wachsschicht können auch aus demselben Material sein. Sie können insbesondere einen identischen Schmelzpunkt aufweisen. Der Schmelzpunkt der ersten Wachsschicht kann insbesondere um höchstens 10 °C, insbesondere höchstens 5 °C vom Schmelzpunkt der zweiten Wachsschicht abweichen. Durch die unterschiedlichen Schmelzpunkte der ersten Wachsschicht und der zweiten Wachsschicht ist es auf einfache Weise möglich, zu erreichen, dass in einem ersten Abschnitt des Reinigungsverfahrens lediglich die Wachsschicht mit dem niedrigeren Schmelzpunkt, insbesondere die äußere Wachsschicht, schmilzt und damit einen Bestandteil der Reinigungszusammensetzung, insbesondere die Lauge zur Lösung freigibt. Der von der zweiten Wachsschicht mit dem höheren Schmelzpunkt, insbesondere der inneren Wachsschicht umgebene zweite Bestandteil der Reinigungszusammensetzung, insbesondere der säurebasierte Bestandteil kann zunächst von der zweiten Wachsschicht umschlossen und damit gegen Auflösung geschützt sein und erst zu einem späteren Verfahrenszeitpunkt nach Aufschmelzen der zweiten Wachsschicht aufgelöst werden.

Gemäß einem weiteren Aspekt der Erfindung ist die zweite Wachsschicht der Reinigungseinheit so ausgebildet, dass sie vollständig innerhalb eines von der der ersten Wachsschicht umgebenen Bereichs angeordnet ist. Die zweite Wachsschicht ist insbesondere von der ersten Wachsschicht beabstandet. Sie kann insbesondere äquidistant zur ersten Wachsschicht angeordnet sein.

Gemäß einem weiteren Aspekt der Erfindung ist die erste Wachsschicht der Reinigungseinheit konzentrisch zur zweiten Wachsschicht angeordnet.

Gemäß einem weiteren Aspekt der Erfindung umfasst die erste Wachsschicht der Reinigungseinheit einen Anteil an Lauge. Gemäß einem weiteren Aspekt der Erfindung umfasst die zweite Wachsschicht der Reinigungseinheit einen Anteil an Säure.

Gemäß einem weiteren Aspekt der Erfindung kann die Lauge außerhalb der zweiten Wachsschicht und innerhalb der ersten Wachsschicht angeordnet sein.

Anstelle der Wachsschichten können auch andere die Bestandteile der Reinigungszusammensetzung umgebende Schutzhüllen vorgesehen sein. Vorzugsweise sind die Schutzhüllen derart ausgebildet, dass sie erst bei Überschreiten einer vorbestimmten Temperatur, beispielsweise ihres Schmelzpunktes, und/oder erst nach einer vorgegebenen Verfahrensdauer den von ihnen umhüllten Bestandteil der Reinigungszusammensetzung freigeben.

Vorzugsweise sind die die Bestandteile der Reinigungszusammensetzung umgebenden Hüllen selbst wasserlöslich und/oder verflüssigbar. Dies erleichtert eine rückstandsfreie Reinigung des Garraums. Gemäß einer Alternative kann die Reinigungseinheit unterschiedliche, separate Teileinheiten aufweisen. Es ist insbesondere möglich, eine erste Teileinheit mit einem laugenbasierten Bestandteil der Reinigungszusammensetzung auszubilden. Es ist insbesondere möglich, einen zweiten Teilbestandteil der Reinigungseinheit mit einem säurebasierten Bestandteil der Reinigungszusammensetzung auszubilden. Durch Vorsehen einer Umhüllung eines oder sämtlicher der Teilbestandteile der Reinigungseinheit mit einer den Teilbestandteil der Reinigungszusammensetzung vollständig umgebenden Hülle kann erreicht werden, dass der entsprechende Teil der Reinigungszusammensetzung erst bei Überschreiten einer bestimmten Temperatur und/oder nach einer vorbestimmten Einwirkdauer freigesetzt, insbesondere aufgelöst wird. Hierdurch kann der Ablauf des Reinigungsverfahrens auf einfache Weise beeinflusst, insbesondere gesteuert werden.

Gemäß der Erfindung ist die Reinigungseinheit mit einem Gegen-Aufnahmemittel ausgebildet, sodass die Reinigungseinheit am Gargutträger angeordnet, insbesondere fixiert werden kann.

Die vorhergehend beschriebenen Aspekte der Ausbildung der Reinigungseinheit bilden eigenständige Aspekte der Erfindung. Sie können unabhängig von den übrigen Aspekten der Erfindung zu Vorteilen führen. Sie sind auch mit weiteren Aspekten der Erfindung kombinierbar.

Weitere Vorteile, Merkmale und Einzelheiten der Erfindung ergeben sich aus der nachfolgenden Beschreibung eines Ausführungsbeispiels anhand der Figuren. Es zeigen:
- Fig. 1: eine perspektivische Darstellung eines Gargeräts zum Erhitzen von Gargut in Form eines Dampfgarofens mit einer Reinigungskombination zum reversiblen Einsetzen in einen Garraum des Gargeräts,
- Fig. 2: eine perspektivische Darstellung der Reinigungskombination in Fig. 1 von schräg oben, mit einem Reinigungseinsatz und einer daran angebrachten Reinigungseinheit,
- Fig. 3: eine perspektivische Darstellung der Reinigungskombination in Fig. 1 von schräg unten mit dem Reinigungseinsatz und der Reinigungseinheit, und
- Fig. 4: eine perspektivische Darstellung der Reinigungseinheit in Fig. 1, wobei die Reinigungseinheit als Reinigungskartusche mit einer Kammer und einer darin angeordneten Reinigungszusammensetzung ausgebildet ist.

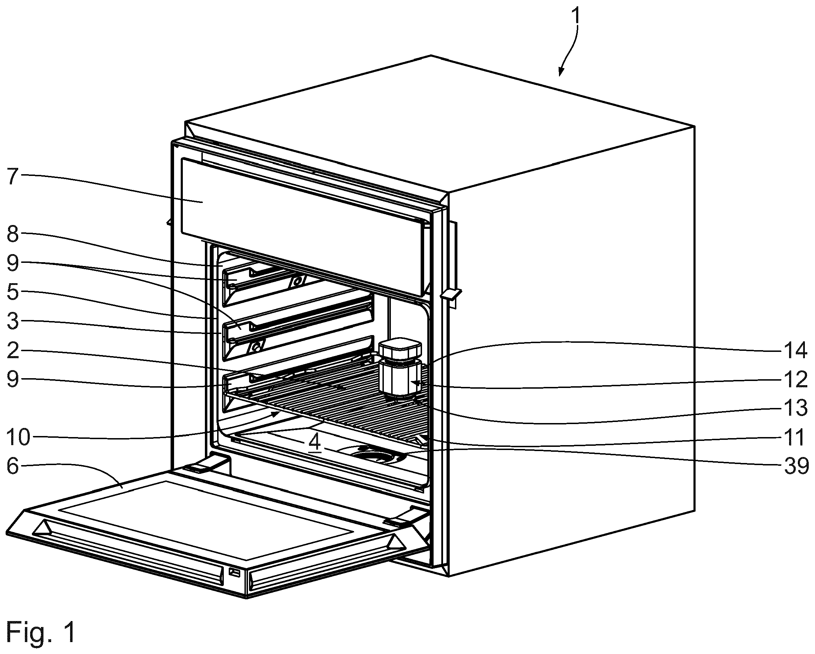

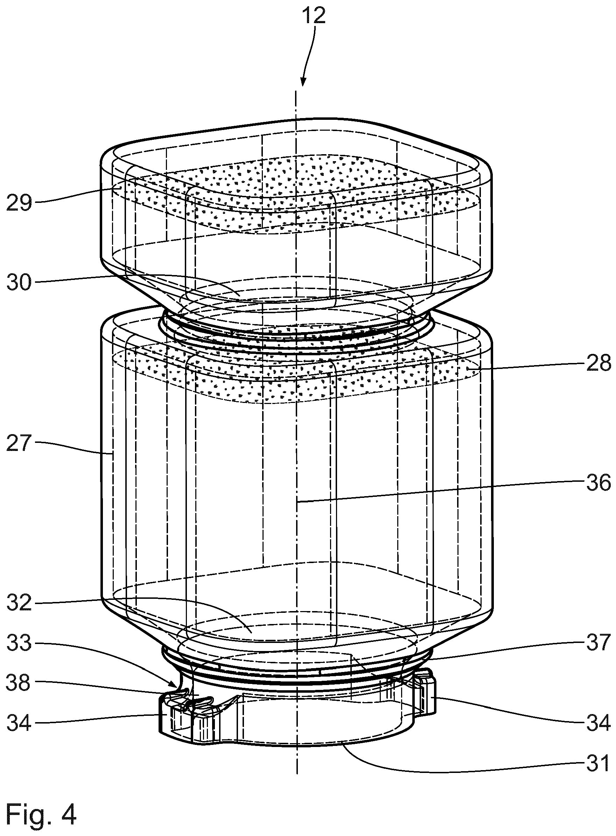

Anhand der Fig. 1 bis Fig. 4 ist ein Gargerät 1 zum Erhitzen von Gargut mit einer entnehmbar darin angeordneten Reinigungskombination 2 beschrieben. Das Gargerät 1 ist als Dampfgarofen ausgebildet und umfasst eine Garkammer 3 zum Aufnehmen des zu erhitzenden Garguts. Die Garkammer 3 begrenzt einen Garraum 4 und umfasst eine Garkammeröffnung 5 zum Beladen und Entladen des Garguts. Die Garkammeröffnung 5 ist mittels einer Garkammertür 6 reversibel verschließbar.

Das Gargerät 1 umfasst eine nicht dargestellte Steuereinrichtung zum Steuern des Garvorgangs und eines Verfahrens zum Reinigen des Garraums 4. Die Steuereinrichtung steht mit einer Benutzerschnittstelle 7 in Signalverbindung. Die Benutzerschnittstelle 7 umfasst einen berührungsempfindlichen Bildschirm zur Eingabe von Steuerungsbefehlen und zur visuellen Ausgaben von Informationen, insbesondere zum Gar- und Reinigungsvorgang. Die Garkammer 3 umfasst zwei Seitenwände 8, eine Bodenwand, eine Rückwand und eine Deckenwand. An den Seitenwänden 8 sind jeweils drei Tragschienen 9 einander paarweise gegenüberliegend angeordnet. Die Tragschienen 9 sind zur darauf aufliegenden Aufnahme eines Gargutträgers 10 ausgebildet.

Die entnehmbar in dem Garraum 4 angeordnete Reinigungskombination 2 umfasst einen Reinigungseinsatz 11 und eine daran angebrachte Reinigungseinheit 12. Der Reinigungseinsatz 11 umfasst ein Aufnahmemittel 13 zum reversibel fixierten Aufnehmen der Reinigungseinheit 12 und einen mit dem Aufnahmemittel 13 verbundenen Tragkörper 14 zum Positionieren des Aufnahmemittels 13 relativ zu dem Garraum 4.

Der Tragkörper 14 umfasst den Gargutträger 10. Der Gargutträger 10 ist als Backrost ausgebildet. Der Reinigungseinsatz 11, insbesondere der Tragkörper 14, weist Stellfüße 15 zum Positionieren des Aufnahmemittels auf. Die Stellfüße 15 sind vorzugsweise dazu ausgebildet, eine zu der Stellfläche beabstandete Anordnung des Aufnahmemittels 13 zu gewährleisten. Die Reinigungseinheit 12 kann hierdurch in besonders einfacher Weise mit dem Reinigungseinsatz 11 verbunden werden, wenn der Reinigungseinsatz auf einer Abstellfläche, wie beispielsweise einer Küchenarbeitsplatte, steht.

Der Gargutträger 10 weist einen Schieneneingriff 16 zum Anbringen des Reinigungseinsatzes 11 an den Tragschienen 9 auf. Der Gargutträger 10 umfasst mehrere Gitterstäbe 17 auf. Die Gitterstäbe 17 bilden einen umlaufenden Gitterrahmen 18 aus. Weitere der Gitterstäbe 17, welche zumindest abschnittsweise parallel zueinander orientiert sind, bilden eine Stellfläche 19 zum Tragen des Garguts aus. Der Gitterrahmen 18 bildet den Schieneneingriff 16 aus.

In einem zentralen Bereich des Reinigungseinsatzes 11, insbesondere des Gargutträgers 10, ist das Aufnahmemittel 13 angeordnet. Insbesondere überlappt eine kleinste konvexe Einhüllende des Aufnahmemittels 13 den geometrischen Flächenschwerpunkt des Reinigungseinsatzes 11, insbesondere des Gargutträgers 10, in einer Draufsicht. Alternativ kann das Aufnahmemittel 13 exzentrisch zu dem zentralen Bereich des Reinigungseinsatzes 11, insbesondere des Gargutträgers 10, angeordnet sein.

Das Aufnahmemittel 13 ist durch zwei der Gitterstäbe 17 ausgebildet. Diese Gitterstäbe 17 bilden Formschlusselemente 21 zum formschlüssigen Verbinden der Reinigungseinheit 12 mit dem Tragkörper 14 aus.

Das Aufnahmemittel 13 umfasst eine Aufnahmeöffnung 22. Die Aufnahmeöffnung 22 durchdringt den Gargutträger 10 in Richtung senkrecht zu der Stellfläche 19. Die Aufnahmeöffnung 22 ist von den die Formschlusselemente 21 ausbildenden Gitterstäben 17 begrenzt. Die Aufnahmeöffnung 22 ist in einer Draufsicht, insbesondere senkrecht zu der Stellfläche 19, in Form eines Kreises mit zwei daran angeschlossenen Schenkeln 23 ausgebildet. Die Schenkel 23 sind parallel zueinander orientiert. Zu dem kreisförmigen Abschnitt 24 der Aufnahmeöffnung 22 erstrecken sich die beiden Schenkel 23 radial und einander diametral gegenüberliegend. Hierzu umfassen die die Formschlusselemente 21 ausbildenden Gitterstäbe 17 jeweils einen zentralen, kreisbogenförmigen Stababschnitt 25 und zwei sich ausgehend davon erstreckende, gerade und zueinander parallele Stababschnitte 26. Die als Formschlusselemente 21 ausgebildeten Gitterstäbe erstrecken sich in derselben Ebene, insbesondere in einer zu der Stellfläche 19 parallelen Ebene.

Ein Durchmesser des kreisförmigen Abschnitts 24 der Aufnahmeöffnung 22 liegt vorzugsweise in einem Bereich von 20 mm bis 100 mm, insbesondere von 25 mm bis 80 mm, insbesondere von 30 mm bis 60 mm, insbesondere von 40 mm bis 50 mm. Vorzugsweise beträgt der Durchmesser D 45 mm. Eine Breite B der Schenkel 23 beträgt 18 mm. Die Breite B ist bestimmt durch den Abstand der geraden, zueinander parallelen Stabschnitte 26 zwischen den beiden das Aufnahmemittel 13 ausbildenden Gitterstäben 17.

An dem Aufnahmemittel 13 ist die Reinigungseinheit 12 angebracht. Die Reinigungseinheit 12 umfasst eine Kammer 27, in der eine Reinigungszusammensetzung 28, 29 angeordnet ist. Die Reinigungszusammensetzung umfasst einen ersten Reinigungsbestandteil 28 und einen zweiten Reinigungsbestandteil 29. Die beiden Bestandteile 28, 29 der Reinigungszusammensetzung sind durch eine zweite Verschlussschicht 30 getrennt voneinander in der Kammer 27 angeordnet. Die Kammer 27 weist eine Abgabeöffnung 31 auf, über welche die Reinigungszusammensetzung 28, 29 in den Garraum 4 abgegeben werden kann. Zwischen der Abgabeöffnung 31 und der Reinigungszusammensetzung 28, 29 ist eine erste Verschlussschicht 32 angeordnet. Die Verschlussschicht 32 befindet sich vorzugsweise auf Höhe des Anlagekragens 37. Eine Haupterstreckungsebene der Verschlussschichten 32 ist vorzugsweise senkrecht zu einer Drehachse 36 der Reinigungseinheit 12 angeordnet. Mittels der ersten Verschlussschicht 32 ist die Reinigungszusammensetzung 28, 29 in der Kammer 27 verliersicher eingeschlossen.

Die Kammer 27 besteht aus einem Kunststoffmaterial, insbesondere aus Polypropylen. Der erste Bestandteil 28 umfasst Natriumkarbonat. Der zweite Bestandteil 29 umfasst Zitronensäure. Beide Reinigungsbestandteile 28, 29 liegen in Form eines feinen Granulats vor.

Die Verschlussschichten 30, 32 umfassen ein schmelzbares Material. Die erste Verschlussschicht 32 besteht aus einem Wachs mit einer Schmelztemperatur von 60° C. Die zweite Verschlussschicht 30 besteht aus einem Wachs mit einer Schmelztemperatur von 90° C.

Die Reinigungseinheit 12 umfasst ein Gegen-Aufnahmemittel 33 zum reversibel fixierten Anbringen der Reinigungseinheit 12 an dem Reinigungseinsatz 11. Das Gegen-Aufnahmemittel 33 weißt zwei Gegen-Formschlusselemente 34 zum formschlüssigen Verbinden mit den Formschlusselementen 21 des Reinigungseinsatzes 11 auf. Die Gegen-Formschlusselemente 34 sind als Vorsprünge ausgebildet, welche einem ansonsten zylinderförmigen Anschlussabschnitt 35 der Reinigungseinheit 12 in radialer Richtung überstehen. Zu einer Drehachse 36 der Reinigungseinheit 12 ist ein an dem zylinderförmigen Anschlussabschnitt 35 angeordneter Anlagekragen 37 rotationssymmetrisch ausgebildet. Ein Dreheingriff 38 ist zwischen den Gegen-Formschlusselementen 34 und dem Anlagekragen 37 ausgebildet. Der Dreheingriff 38 bildet entlang der Drehachse 36 eine rotationssymmetrische Hinterschneidung zwischen dem Anlagekragen 37 und den Gegen-Formschlusselementen 34 aus.

Das Gegen-Aufnahmemittel 33, insbesondere die Gegen-Formschlusselemente 34, sind einstückig, insbesondere stoffschlüssig, mit der Kammer 27 verbunden. Das Gegen-Aufnahmemittel 33 und die Kammer 27 sind in einem Spritzgussverfahren, insbesondere in einem einzigen Verfahrensschritt, hergestellt. Eine Breite b der Gegen-Formschlusselemente 34 der Reinigungseinheit 12 beträgt 16 mm und ist somit geringer als die Breite B der Schenkel 32 des Reinigungseinsatzes 11, insbesondere des Aufnahmemittels 13.

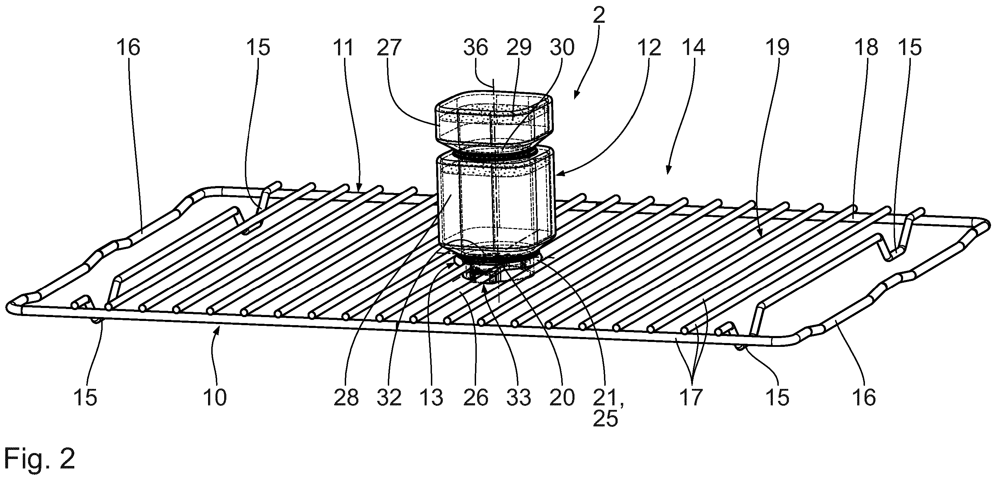

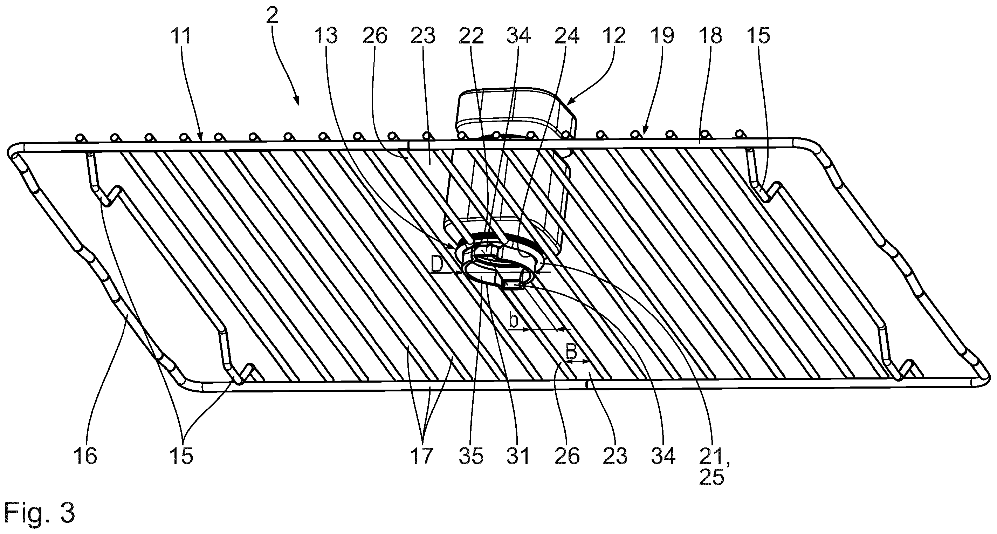

In den Fig. 2 und Fig. 3 ist die Reinigungskombination in einer Offenstellung dargestellt. Das Aufnahmemittel 33 ist in der Aufnahmeöffnung 22 angeordnet. Insbesondere durchdringt der zylinderförmige Verbindungsabschnitt 35 die Aufnahmeöffnung 22.

Die Drehachse 36 ist vertikal orientiert. Die Reinigungseinheit 12 liegt über den Anlagekragen 37 auf den kreisbogenförmigen Stababschnitten 25 der als Formschlusselemente 21 ausgebildeten Gitterstäbe 17 auf. Die Gegen-Formschlusselemente 34 sind in vertikaler Richtung unterhalb der Formschlusselemente 21 angeordnet. Die Reinigungseinheit 12 ist an dem Aufnahmemittel 13 um die Drehachse 36 drehbar angeordnet. Zum Verlagern der Reinigungskombination 2 in eine nicht dargestellte Verschlussstellung ist die Reinigungseinheit 12 um die Drehachse 36 schwenkbar. In der Verschlussstellung hintergreifen die Gegen-Formschlusselemente 34 der Reinigungseinheit 12 die Formschlussmittel 21 des Reinigungseinsatzes 11 formschlüssig und die Abgabeöffnung 31 ist an der Unterseite der Kammer 27 angeordnet.

Die Funktionsweise des Gargeräts 1 und der Reinigungskombination 2 ist mit dem Reinigungseinsatz 11 und der Reinigungseinheit 12 ist wie folgt:
Das Gargerät 1 wird zum Erwärmen von in dem Garraum 4 angeordnetem Gargut verwendet. Den Garvorgang kann der Benutzer durch Eingaben über die Benutzerschnittstelle 7 steuern. Die mit der Benutzerschnittstelle 7 verbundene Steuereinrichtung regelt dabei insbesondere die in dem Garraum 4 herrschende Gartemperatur. Während des Garvorgangs werden die Garkammer 3 und Gargutträger 10 zunehmend durch Ablagerung verschmutzt, die beispielsweise auf verdunstete oder verspritzte oder überlaufende Bestandteile des Garguts zurückzuführen sind. Zum hygienischen Betrieb des Gargeräts 1 ist es notwendig, diese Ablagerungen in regelmäßigen Zeitabständen zu entfernen. Hierzu wird das nachfolgend beschriebene Verfahren zum Reinigen der Garkammer 3 ausgeführt:
Der Reinigungseinsatz 11 und die Reinigungseinheit 12 werden bereitgestellt. Die erste Verschlussschicht 32 verschließt einen Bereich der Kammer 27 in dem die Reinigungszusammensetzung 28, 29 angeordnet ist.

Die Reinigungseinheit 12 wird an dem Reinigungseinsatz 11 angebracht. Hierzu wird der zylinderförmige Verbindungsabschnitt 35 in die Aufnahmeöffnung 22 eingeführt. Der Anlagekragen 37 kontaktiert die bogenförmigen Stababschnitte 25. Die Gegen-Formschlusselemente 34 weisen in Richtung der Längserstreckung der geraden Stabschnitte 26. Die Reinigungskombination 2 befindet sich in der Offenstellung.

Die Reinigungseinheit 12 wird um die Drehachse 36 um 90° gedreht. Die Gegen-Formschlusselemente 34 hintergreifen die in Form der kreisbogenförmigen Stabschnitte 25 vorliegenden Formschlussmittel 21. Die Reinigungseinheit 12 ist an dem Reinigungseinsatz 11 fixiert. Insbesondere ist die Reinigungseinheit 12 relativ zu dem Reinigungseinsatz 11 translatorisch vollständig festgelegt. Die Reinigungskombination 2 befindet sich in der Verschlussstellung.

Die Reinigungskombination 2 wird in den Garraum 4 eingebracht. Insbesondere wird die Reinigungskombination 2 mittels der beiden Tragschieneneingriffe 16 an den Tragschienen 9 des Gargeräts 1 befestigt. Vorzugsweise erfolgt die Befestigung der Reinigungskombination 2 an den in vertikaler Richtung mittleren Tragschienen 9. Hierdurch wird gewährleistet, dass die Reinigungseinheit 12 im Wesentlichen mittig in dem Garraum 4 angeordnet ist. Die Reinigungseinheit 12 kann alternativ auch in einen, bereits in den Garraum 4 eingesetzten Reinigungseinsatz 11, eingesetzt werden.

Die Garraumtür 6 wird geschlossen. Über die Benutzerschnittstelle 7 wählt der Benutzer ein Reinigungsprogramm aus. Das Reinigungsprogramm wird von der Steuereinrichtung ausgeführt.

In einer Vorspülphase wird der Garraum auf eine Vorspültemperatur T_{V} von 50° C erwärmt. Wasser wird über einen nicht dargestellten Zufluss in den Garraum 4 ausgebracht. Insbesondere wird das Wasser auf das Lüfterrad eines Umluftlüfters ausgebracht. Das Lüfterrad wird mittels eines nicht dargestellten Lüftermotors drehangetrieben und das darauf ausgebrachte Wasser wird somit besonders gleichmäßig in dem Garraum 4 verteilt.

Grobe Verschmutzungen werden hierdurch von der Garkammer 3 und von dem Gargutträger 10 gelöst. Das verschmutzte Wasser wird an der Bodenwand der Garkammer 3 gesammelt und über eine Ablauföffnung 39 aus dem Garraum 4 abgeleitet. An die Ablauföffnung 39 ist ein nicht dargestelltes Fluidsystem zum Aufbereiten und Fördern von Flüssigkeiten und Gasen angeschlossen. Das Spülwasser wird über eine Leitung außerhalb des Garraums 4, welche Bestandteil des Fluidsystems ist, mehrfach durch den Garraum 4 zirkuliert. Anschließend wird das verunreinigte Spülwasser abgepumpt, womit die Vorspülphase beendet ist.

In einer Spülphase wird der Garraum auf 65° C erwärmt. Die erste Verschlussschicht 32 schmilzt. Der erste Reinigungsbestandteil 28 der Reinigungszusammensetzung wird hierdurch freigegeben und fällt schwerkraftbedingt durch die Abgabeöffnung 31 aus der Reinigungseinheit 12 heraus. Frischwasser wird auf das rotierende Lüfterrad des Umluftlüfters ausgebracht und verteilt sich in dem Garraum 4. Der erste Bestandteil 28 wird in dem Frischwasser gelöst. Der erste Bestandteil 28 bildet zusammen mit dem Frischwasser eine Reinigungslauge. Die Reinigungslauge gelangt in die Ablauföffnung 39 und wird anschließend mehrfach durch den Garraum 4 zirkuliert. Dabei werden auch hartnäckige Ablagerungen von der Garkammer 3 und dem Gargutträger 10 gelöst. Die verunreinigte Reinigungslauge wird schließlich abgepumpt.

In einer anschließenden Zwischenspülphase wird der Garraum 4 mit Frischwasser gespült. Hierdurch werden noch in dem Garraum 4 verbliebene Rückstände der Reinigungszusammensetzung 28, 29, insbesondere die Reinigungslauge, vollständig aus dem Gargerät 1, insbesondere dem Garraum 4, gespült. Eine Beeinträchtigung nachfolgender Reinigungsphasen, insbesondere aufgrund von Rückständen, die eine Beeinträchtigung des pH-Werts bewirken könnten, wird somit zuverlässig vermieden. Insbesondere wird vermieden, dass die basische Reinigungslauge die Entkalkungswirkung der nachfolgend in den Garraum 4 eingebrachten, sauren Entkalkungslösung abschwächt. Hierzu wird Frischwasser auf das rotierenden Lüfterrad ausgebracht und in dem Garraum 4 verteilt. Das Frischwasser wird mehrfach durch den Garraum 4, insbesondere durch die Ablauföffnung 39 und über das Lüfterrad, zirkuliert. Das Frischwasser wird abgepumpt. Dieser Vorgang wird dreimal wiederholt. Die Zwischenspülphase ist abgeschlossen.

In einer anschließenden Entkalkungsphase wird der Garraum auf eine Entkalkungstemperatur T_{E} von 95° erwärmt. Die zweite Verschlussschicht 30, welche den zweiten Bestandteil 29 der Reinigungszusammensetzung zusammen mit der Kammer 27 einschließt, schmilzt. Der zweite Bestandteil 29 fällt schwerkraftbedingt durch die Abgabeöffnung 31 aus der Reinigungseinheit 12 heraus. Frischwasser wird über das rotierende Lüfterrad in dem Garraum 4 verteilt. Das Frischwasser vermischt sich mit dem zweiten Bestandteil 29 und bildet eine Entkalkungslösung. Die Entkalkungslösung wird zu der Ablauföffnung 39 geleitet und mehrfach über den Garraum 4, insbesondere durch die Ablauföffnung 39, und über das rotierende Lüfterrad, zirkuliert. Kalkablagerungen an der Garkammer 3, dem Gargutträger 10 und in dem der Ablauföffnung 39 nachgeschalteten Fluidsystem werden gelöst. Die kalkhaltige Flüssigkeit wird über die Ablauföffnung 39 abgepumpt. Die Entkalkungsphase ist beendet.

Eine Nachspülphase wird initiiert. Die Nachspülphase entspricht der Zwischenspülphase. Rückstände der Reinigungszusammensetzung 28, 29, insbesondere der Entkalkungslösung werden hierdurch vollständig aus dem Gargerät 1, insbesondere dem Garraum 4, gespült. Nach Beendigung der Nachspülphase ist der Reinigungsvorgang abgeschlossen.

Die Reinigungskombination 2 wird aus dem Garraum 4 entfernt. Die Reinigungseinheit 12 wird um 90° gegen die Drehachse 36 gedreht. Der Formschluss zwischen dem Aufnahmemittel 13 und dem Gegen-Aufnahmemittel 33 ist aufgehoben. Die Reinigungseinheit 12 kann von dem Reinigungseinsatz 11 abgenommen werden.

Der Reinigungseinsatz 11 kann als herkömmlicher Backrost zum Tragen von Gargut verwendet werden.

Durch die Ausbildung des Reinigungseinsatzes 11 mit dem Aufnahmemittel 13 zum reversibel fixierten Aufnehmen der Reinigungseinheit 12 wird in zuverlässiger Weise gewährleistet, dass die Reinigungseinheit 12 an einer vorbestimmten zentralen oder exzentrischen Position innerhalb des Garraums 4 anordenbar ist. Die für den Reinigungserfolg erforderliche Verteilung der Reinigungszusammensetzung in dem Garraum 4 wird somit zuverlässig gewährleistet. Insbesondere wird sichergestellt, dass die Reinigungszusammensetzung 28, 29 vollständig aus der Reinigungseinheit 12, insbesondere aus der Kammer 27, abgegeben und dem Spülprozess zugeführt werden kann. Durch die Ausbildung der Reinigungseinheit 12 mit der Kammer 27 und dem Gegen-Aufnahmemittel 33 kann die Reinigungseinheit 12 zuverlässig und verliersicher mit dem Reinigungseinsatz 11 verbunden werden. Ein Verlagern der Reinigungseinheit 12 innerhalb des Garraums 4 während des Reinigungsprozesses, insbesondere aufgrund der Kühlluft- oder Flüssigkeitszirkulation, kann vermieden werden. Die Abgabe der Reinigungszusammensetzung 28, 29 erfolgt besonders zuverlässig, wodurch das Reinigungsverfahren robust und effizient ist.

## Patentansprüche

1. Reinigungskombination (2) für ein Gargerät (1), aufweisend eine Reinigungseinheit (12) und
1.1. einen Reinigungseinsatz (11) zum entnehmbaren Anordnen in einem Garraum (4) des Gargeräts (1), aufweisend
1.1.1. ein Aufnahmemittel (13) zum reversibel fixierten Aufnehmen der Reinigungseinheit (12) mit einer Reinigungszusammensetzung (28, 29), und
1.1.2. einen mit dem Aufnahmemittel (13) verbundenen Tragkörper (14) zum Positionieren des Aufnahmemittels (13) relativ zu dem Garraum (4),
1.1.3. wobei der Tragkörper (14) einen Gargutträger (10) aufweist, und
1.2. die Reinigungseinheit (12) für den Reinigungseinsatz (11), aufweisend
1.2.1. eine Reinigungszusammensetzung (28, 29),
1.2.2. eine Kammer (27), in der die Reinigungszusammensetzung (28, 29) angeordnet ist, mit einer Abgabeöffnung (35) zum Abgeben der Reinigungszusammensetzung (28, 29) in den Garraum (4) des Gargeräts (1), und
1.2.3. ein Gegen-Aufnahmemittel (33) zum reversibel fixierten Anbringen der Reinigungseinheit (12) an dem Reinigungseinsatz (11),
**dadurch gekennzeichnet, dass**
1.3 das Aufnahmemittel (13) ein Formschlusselement (21) zum formschlüssigen Verbinden mit der Reinigungseinheit (12) aufweist, wobei das Formschlusselement (21) zur Ausbildung eines Bajonettverschlusses und/oder einer Rastverbindung und/oder einer Riegelverbindung mit der Reinigungseinheit (12) ausgebildet ist.

2. Reinigungskombination (2) nach Anspruch 1, **dadurch gekennzeichnet, dass** das Aufnahmemittel (13) in einem zentralen Bereich des Gargutträgers (10) angeordnet ist.

3. Reinigungskombination (2) nach Anspruch 1 oder 2, **dadurch gekennzeichnet, dass** der Gargutträger (10) ein Backrost ist.

4. Reinigungskombination (2) nach Anspruch 3, **dadurch gekennzeichnet, dass** das Aufnahmemittel (13) durch mindestens einen Gitterstab (17) des Backrosts ausgebildet ist.

5. Reinigungskombination (2) nach einem der vorstehenden Ansprüche, **dadurch gekennzeichnet, dass** der Tragkörper (14) einen Schieneneingriff (16) zum Verbinden mit einer Tragschiene (9) des Gargeräts (1) aufweist.

6. Reinigungskombination (2) nach einem der vorstehenden Ansprüche, **dadurch gekennzeichnet, dass** die Reinigungszusammensetzung (28, 29) feste und/oder flüssige Reinigungsbestandteile (28, 29) umfasst.

7. Reinigungskombination (2) nach einem der vorstehenden Ansprüche, **dadurch gekennzeichnet, dass** das Gegen-Aufnahmemittel (33) ein Gegen-Formschlusselement (34) zum formschlüssigen Verbinden mit dem Reinigungseinsatz (11) aufweist.

8. Reinigungskombination (2) nach einem der vorstehenden Ansprüche, **dadurch gekennzeichnet, dass** das Gegen-Aufnahmemittel (33) einstückig mit der Kammer (27) verbunden ist.

9. Reinigungskombination (2) nach einem der vorstehenden Ansprüche, **dadurch gekennzeichnet, dass** die an dem Reinigungseinsatz (11) angebrachte Reinigungseinheit (12) den Tragkörper (14) durchdringt.

10. Reinigungskombination (2) nach einem der vorstehenden Ansprüche, **dadurch gekennzeichnet, dass** die Reinigungseinheit (12) derart an dem Reinigungseinsatz (11) angeordnet ist, dass die Reinigungszusammensetzung (28, 29) schwerkraftbedingt durch die Abgabeöffnung (31) aus der Kammer (27) abgebbar ist.

11. Verfahren zum Reinigen einer Garkammer (3) eines Gargeräts (1), umfassend die Schritte:
11.1. Bereitstellen einer Reinigungskombination (2) nach einem der vorstehenden Ansprüche außerhalb des Garraums (4),
11.2. Verbinden der Reinigungseinheit (12) mit dem Reinigungseinsatz (11) durch Anbringen des Gegen-Aufnahmemittels (33) an dem Aufnahmemittel (13),
11.3. Positionieren des Reinigungseinsatzes (11) mit der Reinigungseinheit (12) in dem Garraum (4),
11.4. Abgeben der Reinigungszusammensetzung (28, 29) durch die Abgabeöffnung (31) in den Garraum (4) zum Reinigen der Garkammer (3), und
11.5. Entnehmen des Reinigungseinsatzes (11) mit der Kammer (27) aus dem Garraum (4).

12. Verfahren nach Anspruch 11, **gekennzeichnet durch** temperaturbedingtes Öffnen zweier Verschlussschichten (30, 32) der Reinigungseinheit (12) zum Freigeben zweier unterschiedlicher Reinigungsbestandteile (28, 29) der Reinigungszusammensetzung bei jeweils unterschiedlichen Aktivierungstemperaturen.

## Claims

1. Cleaning combination (2) for a cooking appliance (1), having a cleaning unit and
1.1. a cleaning insert (11) for removable arrangement in a cooking space (4) of the cooking appliance (1), having
1.1.1. a receiving means (13) for receiving the cleaning unit (12) with a cleaning composition (28, 29) in a reversibly fixed manner, and
1.1.2. a supporting body (14) connected to the receiving means (13), for positioning the receiving means (13) relative to the cooking space (4),
1.3. wherein the supporting body (14) comprises a carrier (10) for the food to be cooked, and
1.2. the cleaning unit (12) for the cleaning insert (11), having
1.2.1 a cleaning composition (28, 29),
1.2.2. a chamber (27) in which the cleaning composition (28, 29) is arranged, having a dispensing opening (35) for dispensing the cleaning composition (28, 29) into the cooking space (4) of the cooking appliance (1), and
1.2.3. a counter-receiving means (33) for reversibly fixing the cleaning unit (12) to the cleaning insert (11),
**characterized in that**
1.3. the receiving means (13) has a formfit element (21) for a formfit connection to the cleaning unit (12), wherein the formfit element (21) is designed to form bayonet lock and/or a snap-in connection and/or a latch connection with the cleaning unit (12).

2. Cleaning combination (2) according to claim 1, **characterized in that** the receiving means (13) is arranged in a central region of the carrier (10) for the food to be cooked.

3. Cleaning combination (2) according to claim 1 or 2, **characterized in that** the carrier (10) for the food to be cooked is a baking rack.

4. Cleaning combination (2) according to claim 3, **characterized in that** the receiving means (13) is configured by at least one rack bar (17) of the baking rack.

5. Cleaning combination (2) according to any one of the preceding claims, **characterized in that** the supporting body (14) has a rail engagement (16) for being connected to a supporting rail (9) of the cooking appliance (1).

6. Cleaning combination (2) according to any one of the preceding claims, **characterized in that** the cleaning composition (28,29) comprises solid and/or liquid cleaning components (28, 29).

7. Cleaning combination (2) according to any one of the preceding claims, **characterized in that** the counter-receiving means (33) has a counter-formfit-locking element (34) for a formfit connection to the cleaning insert (11).

8. Cleaning combination (2) according to any one of the preceding claims, **characterized in that** the counter-receiving means (33) is connected to the chamber (27) in one piece.

9. Cleaning combination (2) according to any one of the preceding claims, **characterized in that** the cleaning unit (12) attached to the cleaning insert (11) penetrates the supporting body (14).

10. Cleaning combination (2) according to any one of the preceding claims, **characterized in that** the cleaning unit (12) is arranged on the cleaning insert (11) in such a way that the cleaning composition (28, 29) can be dispensed from the chamber (27) by gravity through the dispensing opening (31).

11. Method for cleaning a cooking chamber (3) of a cooking appliance (1), comprising the steps of:
11.1. providing a cleaning combination (2) according to any one of the preceding claims outside the cooking space (4),
11.2. connecting the cleaning unit (12) to the cleaning insert (11) by attaching the counter-receiving means (33) to the receiving means (13),
11.3. positioning the cleaning insert (11) with the cleaning unit (12) in the cooking space (4),
11.4. dispensing the cleaning composition (28, 29) through the dispensing opening (31) into the cooking space (4) for cleaning the cooking chamber (3), and
11.5. removing the cleaning insert (11) with the chamber (27) from the cooking space (4).

12. The method according to claim 11, **characterized by** temperature-induced opening of two sealing layers (30, 32) of the cleaning unit (12) to release two different cleaning ingredients (28, 29) of the cleaning composition at different activation temperatures, respectively.

## Revendications

1. Combinaison de nettoyage (2) pour un appareil de cuisson (1), comportant une unité de nettoyage (12) et
1.1. un insert de nettoyage (11) destiné à être agencé de manière amovible dans un espace de cuisson (4) de l'appareil de cuisson (1), comportant
1.1.1. un moyen de logement (13) destiné à loger de manière réversiblement fixée l'unité de nettoyage (12) avec une composition de nettoyage (28, 29), et
1.1.2. un corps de support (14) relié au moyen de logement (13) pour le positionnement du moyen de logement (13) par rapport à l'espace de cuisson (4) ;
1.1.3. dans laquelle le corps de support (14) comporte un support d'aliment à cuire (10), et
1.2. l'unité de nettoyage (12) pour l'insert de nettoyage (11) comportant
1.2.1. une composition de nettoyage (28, 29) ;
1.2.2. une chambre (27) dans laquelle la composition de nettoyage (28, 29) est agencée, ayant un orifice de distribution (35) pour distribuer la composition de nettoyage (28, 29) dans l'espace de cuisson (4) de l'appareil de cuisson (1) ; et
1.2.3. un moyen de logement complémentaire (33) destiné à rapporter de manière réversiblement fixée l'unité de nettoyage (12) sur l'insert de nettoyage (11) ;
**caractérisée en ce que**
1.3 le moyen de logement (13) comporte un élément de complémentarité de formes (21) pour un assemblage par complémentarité de formes à l'unité de nettoyage (12), dans laquelle l'élément de complémentarité de formes (21) est conçu pour réaliser une fermeture par baïonnette et/ou un assemblage à enclenchement et/ou un assemblage par verrou avec l'unité de nettoyage (12).

2. Combinaison de nettoyage (2) selon la revendication 1, **caractérisée en ce que** le moyen de logement (13) est disposé dans une zone centrale du support d'aliment à cuire (10).

3. Combinaison de nettoyage (2) selon la revendication 1 ou 2, **caractérisée en ce que** le support d'aliment à cuire (10) est une grille de cuisson.

4. Combinaison de nettoyage (2) selon la revendication 3, **caractérisée en ce que** le moyen de logement (13) est formé par au moins un barreau de grille (17) de la grille de cuisson.

5. Combinaison de nettoyage (2) selon l'une des revendications précédentes, **caractérisée en ce que** le corps de support (14) comporte une prise de rail (16) destinée à être reliée à un rail de support (9) de l'appareil de cuisson (1).

6. Combinaison de nettoyage (2) selon l'une des revendications précédentes, **caractérisée en ce que** la composition de nettoyage (28, 29) comprend des composants de nettoyage solides et/ou liquides (28, 29).

7. Combinaison de nettoyage (2) selon l'une des revendications précédentes, **caractérisée en ce que** le moyen de logement complémentaire (33) comporte un élément complémentaire de complémentarité de formes (34) pour un assemblage par complémentarité de formes avec l'insert de nettoyage (11).

8. Combinaison de nettoyage (2) selon l'une des revendications précédentes, **caractérisée en ce que** le moyen de logement complémentaire (33) est relié d'un seul tenant à la chambre (27).

9. Combinaison de nettoyage (2) selon l'une des revendications précédentes, **caractérisée en ce que** l'unité de nettoyage (12) rapportée sur l'insert de nettoyage (11) traverse le corps de support (14).

10. Combinaison de nettoyage (2) selon l'une des revendications précédentes, **caractérisée en ce que** l'unité de nettoyage (12) est disposée sur l'insert de nettoyage (11) de telle sorte que la composition de nettoyage (28, 29) peut être distribuée à partir de la chambre (27), par gravité, à travers l'orifice de distribution (31).

11. Procédé de nettoyage d'une chambre de cuisson (3) d'un appareil de cuisson (1), comprenant les étapes consistant à :
11.1. fournir une combinaison de nettoyage (2) selon l'une des revendications précédentes à l'extérieur de l'espace de cuisson (4),
11.2. relier l'unité de nettoyage (12) à l'insert de nettoyage (11) en rapportant le moyen de logement complémentaire (33) sur le moyen de logement (13),
11.3. positionner l'insert de nettoyage (11) avec l'unité de nettoyage (12) dans l'espace de cuisson (4),
11.4. distribuer la composition de nettoyage (28, 29) à travers l'orifice de distribution (31) dans l'espace de cuisson (4) pour le nettoyage de la chambre de cuisson (3), et
11.5. retirer l'insert de nettoyage (11) avec la chambre (27) de l'espace de cuisson (4).

12. Procédé selon la revendication 11, **caractérisé par** une ouverture induite par la température de deux couches d'obturation (30, 32) de l'unité de nettoyage (12) pour libérer deux différents composants de nettoyage (28, 29) de la composition de nettoyage à des températures d'activation respectivement différentes.
